# EUROPÄISCHE PATENTSCHRIFT

(11) **EP 2 443 421 B1**
(45) Veröffentlichungstag und Bekanntmachung des Hinweises auf die Patenterteilung: **18.12.2013**
(21) Anmeldenummer: 10724093.9
(22) Anmeldetag: 16.06.2010
(51) Int. Cl.: G01D 21/00

(54) **VORRICHTUNG ZUM ERFASSEN UND ÜBERTRAGEN EINES MESSWERTS, REIHENSCHALTUNG, SYSTEM ZUM ERFASSEN UND ÜBERTRAGEN VON MESSWERTEN UND HAUSHALTSGERÄT**
DEVICE FOR CAPTURING AND TRANSFERRING A MEASURED VALUE, SERIES CIRCUIT, SYSTEM FOR CAPTURING AND TRANSFERRING MEASURED VALUES, AND HOUSEHOLD APPLIANCE
DISPOSITIF POUR DÉTECTER ET TRANSMETTRE UNE VALEUR MESURÉE, MONTAGE SÉRIE, SYSTÈME DE DÉTECTION ET DE TRANSMISSION DE VALEURS MESURÉES ET APPAREIL ÉLECTROMÉNAGER

(30) Priorität: 16.06.2009 DE 102009025396
(43) Veröffentlichungstag der Anmeldung: 25.04.2012
(73) Patentinhaber: Prettl Home Appliance Solutions GmbH, 16816 Neuruppin (DE)
(72) Erfinder: GENSCHOW, Dieter, 72793 Pfullingen (DE); KRAUSE, Olaf, 16816 Neuruppin (DE)
(74) Vertreter: Witte, Weller & Partner
(86) Internationale Anmeldenummer: PCT/EP2010/058458
(87) Internationale Veröffentlichungsnummer: WO 2010/146081

(56) Entgegenhaltungen:
- EP-A2- 0 412 618
- US-A1- 2007 152 709

## Beschreibung

Die vorliegende Erfindung betrifft eine Vorrichtung zum Erfassen und Übertragen eines Messwerts, insbesondere eines Messwerts, der eine Annäherung oder Berührung bezogen auf mindestens ein Sensorelement anzeigt.

Die Erfindung betrifft außerdem eine Reihenschaltung mit mindestens einer ersten und einer zweiten Vorrichtung der zuvor beschriebenen Art.

Ferner betrifft die Erfindung ein System zum Erfassen und Übertragen von Messwerten, insbesondere von Messwerten, die eine Annäherung oder Berührung bezogen auf Sensorelemente anzeigen.

Schließlich betrifft die Erfindung auch ein Haushaltsgerät mit einer zuvor beschriebenen Vorrichtung oder mit einer zuvor beschriebenen Reihenschaltung oder mit einem zuvor beschriebenen System.

Heutige technische Geräte verfügen über eine Vielzahl an Sensoren, Detektoren, Schaltern, Tastern etc. Das Abfragen und Auswerten dieser Elemente wird mit steigender Anzahl immer aufwendiger und teurer und stellt insbesondere bei Haushaltsgeräten oder bei Bedienelementen in einem Automobil einen erheblichen Kostenfaktor dar.

Der Stand der Technik schlägt in diesem Zusammenhang im Wesentlichen zwei Ansätze vor. Beim ersten Ansatz wird eine zentrale Kontrolleinrichtung verwendet, die direkt mit allen Sensoren, Detektoren, Schaltern, Tastern etc. verbunden ist. Dieser Ansatz hat den Vorteil, dass er verhältnismäßig günstig zu realisieren ist. Er hat allerdings auch den erheblichen Nachteil, dass mit zunehmendem Abstand zwischen der Kontrolleinrichtung und den einzelnen Elementen eine immer längere Verkabelung notwendig wird. Sind mehrere Elemente weit von der Kontrolleinrichtung entfernt, so vervielfacht sich die benötigte Gesamtkabellänge.

Der zweite Ansatz verwendet ein Bussystem, häufig ein Ringbussystem, bei dem alle Elemente mit dem jeweils nächstliegenden Einkopplungspunkt in das Bussystem verbunden sind. Der Vorteil dieses Ansatzes ist, dass die erforderliche Gesamtkabellänge ganz erheblich reduziert werden kann. Betrachtet man allerdings die Kostenseite, so ist festzustellen, dass dieser Ansatz mit erheblichen Kosten für das Bussystem verbunden ist. Außerdem müssen bei beiden Ansätzen noch erhebliche Anstrengungen unternommen werden, die jeweiligen Messwerte zu erfassen, an die Kontrolleinrichtung zu leiten und dort auszuwerten.

EP 0 412 618 A2 zeigt eine adaptive Drehzahlmessvorrichtung mit einer Logikschaltung mit einem ersten Eingangsport, einem zweiten Eingangsport, einem dritten Eingangsport, und einem ersten Ausgangsport, und mit einem Rückkopplungspfad.

Es ist eine Aufgabe der vorliegenden Erfindung, eine verbesserte Vorrichtung zum Erfassen und Übertragen eines Messwerts aufzuzeigen.

Es ist eine weitere Aufgabe der vorliegenden Erfindung, eine verbesserte Reihenschaltung von Vorrichtungen gemäß der eingangs genannten Art aufzuzeigen.

Außerdem ist es eine Aufgabe der vorliegenden Erfindung, ein verbessertes System zum Erfassen und Übertragen von Messwerten aufzuzeigen.

Schließlich ist es eine Aufgabe der vorliegenden Erfindung, ein verbessertes Haushaltsgerät aufzuzeigen.

Gemäß einem ersten Aspekt der vorliegenden Erfindung wird die Aufgabe gelöst durch eine eingangs genannte Vorrichtung mit
- einer Logikschaltung mit einem ersten Eingangsport, einem zweiten Eingangsport, einem dritten Eingangsport und einem ersten Ausgangsport, und
- einem Rückkopplungspfad, der eine Verbindung zwischen dem ersten Ausgangsport und dem dritten Eingangsport bildet und der dafür ausgebildet ist, eine Änderung des Zustands des ersten Ausgangsports mit einer Zeitkonstanten verzögert auf den dritten Eingangsport zurückzukoppeln,
wobei der Rückkopplungspfad eine Impedanz aufweist, die dafür ausgebildet ist, sich in Abhängigkeit von dem erfassten Messwert zu ändern und dadurch die Zeitkonstante der Rückkopplung im Rückkopplungspfad zu ändern, und
wobei die Logikschaltung dafür ausgebildet ist, in Abhängigkeit davon, ob am zweiten Eingangsport ein erster oder ein zweiter logischer Zustand anliegt, einen ersten oder einen zweiten Betriebszustand einzustellen, wobei
- im ersten Betriebszustand eine Änderung eines logischen Zustands am ersten Eingangsport eine Änderung eines logischen Zustands am ersten Ausgangsport hervorruft und eine Änderung eines logischen Zustands am dritten Eingangsport keine Änderung des logischen Zustands am ersten Ausgangsport hervorruft, und
- im zweiten Betriebszustand eine Änderung des logischen Zustands am dritten Eingangsport eine Änderung des logischen Zustands am ersten Ausgangsport hervorruft.

Die vorgeschlagene Vorrichtung bietet eine Vielzahl von Vorteilen, von denen nachfolgend einige näher erläutert werden.

Die Vorrichtung weist das beschriebene erste digitale Element auf. Unter dem Begriff "digitales Element" sollen im Rahmen dieser Anmeldung solche Elemente verstanden werden, die an ihrem Ausgangsport nur diskrete Werte ausgeben können, nicht aber beliebige Werte. Solche Elemente sollen außerdem insbesondere die Eigenschaft haben, dass nur Zustandsänderungen an den Eingangsports des Elements in einem diskreten Raster Änderungen am Ausgangsport hervorrufen können und nicht jede kleine infinitesimale Änderung. Zu solchen digitalen Elementen zählen beispielsweise Logikgatter, Mikroprozessoren und Datenspeicher.

Vereinfacht gesagt, kann ein Informationssignal am Eingang der Vorrichtung auf den Ausgang der Vorrichtung durchgeschleift werden, wenn der zweite Eingangsport einen konstanten Zustand hat, insbesondere wenn das zweite Element passiv geschaltet ist. Ist hingegen das zweite Element aktiv geschaltet und der Zustand am ersten Eingangsport konstant, so kann das Signal aus dem Rückkopplungspfad an den ersten Ausgang gegeben werden.

Da die Vorrichtung also sowohl über die Funktion verfügt, ein Signal von ihrem Eingang an ihren Ausgang weiterzugeben, als auch ein in der Vorrichtung generiertes Signal auf den Ausgang zu geben, ist eine besonders einfache Möglichkeit gegeben, mehrere Vorrichtungen in Reihe zu schalten, prinzipiell sogar beliebig viele Vorrichtungen.

Im Hinblick auf die Erfassung eines logischen Zustands ist es vorteilhaft Schwellenwerte zu verwenden. Betrachtet man auf einer gedachten Skala von 0 % bis 100 % alle Pegel/Werte, die an einem Eingangsport anliegen können, wobei 0 % für den Minimalwert und 100 % für den Maximalwert steht, so ist es vorteilhaft, wenn der Schwellenwert für den einen logischen Zustand, insbesondere "1", oberhalb 50 %, insbesondere oberhalb 70 % und besonders bevorzugt oberhalb 90 % liegt und/oder der Schwellenwert für den anderen logischen Zustand, insbesondere "0", unterhalb 50 %, insbesondere unterhalb 30 % und besonders bevorzugt unterhalb 10 % liegt. Dadurch stabilisiert sich das Verhalten im Rückkopplungspfad. Insbesondere kann so die Zeitkonstante des Rückkopplungspfads erhöht werden, so dass die Zustandsänderungen am zweiten Ausgangsport langsamer erfolgen und dann besonders einfach zu erfassen sind.

In diesem Zusammenhang sei darauf hingewiesen, dass eine Unterscheidung in "erster" und "zweiter" Zustand verwendet wird, um aufzuzeigen, dass von zwei verschiedenen Zuständen die Rede ist. Dabei bleibt es aber von der jeweiligen Implementierung abhängig, ob der erste Zustand "0" und der zweite Zustand "1" ist oder ob der erste Zustand "1" und der zweite Zustand "0" ist. Dabei sind die Zustände jeweils auf das entsprechende Bauteil bezogen. Das bedeutet, ein erster Zustand bei einem Bauteil muss nicht gleich dem ersten Zustand bei einem anderen Bauteil sein.

Grundsätzlich ist es sogar möglich, logische Zustände mit mehreren Bits zu verarbeiten, bspw. bei zwei Bits die Zustände "00", "01", "10" und "11" oder bei drei Bits die Zustände "000", "001", "010", "011", "100", "101", "110" und "111". Die Verwendung der logischen Zuständen "0" und "1" ermöglicht aber eine besonders einfache und besonders sichere Ausgestaltung der Vorrichtung, da sich die logischen Zustände besonders gut unterscheiden lassen. Je nach Nomenklatur können diese Zustände auch als "high" oder "low" bezeichnet werden. Es handelt sich bei diesen logischen Zuständen um digitale Werte, die durch analoge Spannungen repräsentiert werden. Es ist vorteilhaft, wenn sich an dem Ausgangsport ausschließlich die Zustände "0" und "1" einstellen können. Dies ermöglicht eine besonders gute Unterscheidbarkeit der beiden Zustände.

Dabei ist es insbesondere vorteilhaft, wenn der logische Zustand "1" durch eine Spannung größer als 2,5 V, insbesondere größer als 5 V und insbesondere größer als 10 V dargestellt wird und der logische Zustand "0" durch einen Wert repräsentiert wird, der kleiner ist als 50 % des Werts für den logischen Zustand "1", bevorzugt kleiner als 25 % und besonders bevorzugt kleiner als 10 %. Insbesondere vorteilhaft ist es, wenn der logische Zustand "0" durch eine Spannung von ungefähr 0 V dargestellt wird,

Die Impedanz im Rückkopplungspfad kann in vielfältiger Weise ausgeführt werden. Sie kann resistive und/oder kapazitive und/oder induktive Eigenschaften aufweisen und kann in Reihe im Rückkopplungspfad angeordnet sein und/oder gegen ein anderes Potential, insbesondere gegen Masse, an den Rückkopplungspfad angeschlossen sein. Es sind auch Kombinationen verschiedener Elemente und verschiedener Anschlussarten möglich.

Die Impedanz erfüllt die Funktionalität, dass sie für verschiedene Werte einer Messgröße verschiedene Impedanzwerte annimmt und damit zu verschiedenen Zeitkonstanten im Rückkopplungspfad führt. Dies ermöglicht einen Rückschluss von der Zeitkonstante auf den zu erfassenden Messwert.

Auf die Funktion des Rückkopplungspfads soll an dieser Stelle nur kurz eingegangen werden, da sie noch im Zusammenhang mit den Ausführungsbeispielen im Detail erläutert wird. Die Funktionsweise des zweiten Elements im Zusammenspiel mit dem Rückkopplungspfad ist wie folgt. Eine Zustandsänderung am zweiten Ausgangsport wird mit einer Zeitkonstanten verzögert an den vierten Ausgangsport weitergegeben. Tritt die Zustandsänderung am vierten Eingangsport ein, so bewirkt dies wiederum eine Zustandsänderung am zweiten Ausgangsport. Auch dieser geänderte Zustand wird wiederum mit einer Zeitkonstanten verzögert an den vierten Eingangsport weitergegeben. Wenn das zweite Element aktiviert ist, finden die Zustandsänderungen am zweiten Ausgangsport und am vierten Eingangsport derart statt, dass eine Änderung des Zustands am vierten Eingangsport eine solche Änderung des Zustands am zweiten Ausgangsport hervorruft, die eine erneute - mit einer Zeitkonstanten verzögerte - Änderung des Zustands am vierten Eingangsport bewirkt, und so weiter.

Dies führt dazu, dass sich bei einer Aktivität des zweiten Elements ein ständig änderndes Signal am zweiten Ausgangsport einstellt, welches über das erste Element zum Ausgang der Vorrichtung geführt wird. Anhand der Frequenz, mit der die Änderungen in diesem Signal stattfinden, kann unmittelbar auf den Messwert der gewünschten Messgröße geschlossen werden.

Für die Bestimmung des Messwerts aus der Frequenz, die sich am zweiten Ausgangsport, bzw. dann am ersten Ausgangsport und am Ausgang der Vorrichtung, einstellt, werden insbesondere die folgenden Möglichkeiten als vorteilhaft angesehen. Zum einen ist es möglich, aufgrund der physikalischen Gegebenheiten einen mathematischen Zusammenhang zwischen der Messgröße und der Frequenz anzugeben. Damit kann dann bei Kenntnis einer bestimmten Frequenz der entsprechende Messwert der Messgröße ermittelt werden. Zum anderen kann anhand von Versuchen ermittelt werden, welche Frequenzen welche Messwerte repräsentieren. Die entsprechenden Zusammenhänge werden dann vorteilhafterweise in einer Nachschlage-Tabelle (lookup table) abgelegt und können dann auf einfache Weise abgefragt werden.

Die Zeitkonstante für die Rückkopplung im Rückkopplungspfad liegt vorteilhafterweise zwischen 10 ns und 100 ms, insbesondere zwischen 1 µs und 10 ms, und besonders bevorzugt zwischen 10 µs und 1 ms.

Die vorgeschlagene Vorrichtung kann dabei insbesondere bei folgenden Anwendungen vorteilhaft eingesetzt werden:
- Näherungssensor, kapazitives Wirkprinzip
- Dehnungsmessstreifen, resistives Wirkprinzip
- Feuchtsensor, kapazitives Wirkprinzip
- Lichtdetektor, differentiell-resistives Wirkprinzip
- Temperatursensor, differentiell-resistives Wirkprinzip
- Spule, induktives Wirkprinzip
- Schalter bzw. Taster, resistives Wirkprinzip (EIN/AUS)

Da die Vorrichtung digitale Elemente verwendet, lassen sich Störquellen leichter herausfiltern als dies bei analogen Signalen möglich ist.

Ein Vorteil der Vorrichtung gemäß der vorliegenden Erfindung liegt in der Umsetzung eines Messwerts in eine Frequenz. Dies soll anhand eines Beispiels verdeutlicht werden: Ein Lichtsensor, der in der Nacht genauso wie bei hellem Sonnenschein Messwerte liefern soll, liefert Messwerte im Bereich zwischen 0,01 lx und 100.000 lx. Um dieses Signal analog, insbesondere über eine Spannung, verzerrungs- und verlustfrei mit guter Auflösung, z.B. 0,01 lx, wiederzugeben, sind große Anstrengungen hinsichtlich der Messtechnik erforderlich. Eine nachfolgende Digitalisierung des Signals wäre mit weiterem Aufwand verbunden. Wandelt man das Signal allerdings in eine Frequenz um, so kann mit moderatem Aufwand die geforderte Auflösung erreicht werden. Da ein herkömmlicher Mikrocontroller eine Frequenz ohne Weiteres auf 0,001 Hz genau bestimmen kann, kann beispielsweise ein Frequenzbereich von 0,1 Hz bis 100 kHz problemlos abgebildet werden.

Die Formulierung, dass eine Änderung eines logischen Zustands an einem Eingangsport eine Änderung eines logischen Zustands an einem Ausgangsport bewirkt, bedeutet im Sinne der Erfindung, dass eine zeitliche Abfolge von Flanken am Eingangsport als eine zeitliche Abfolge von Flanken am Ausgangsport ausgegeben wird. Dabei ist es nicht erforderlich, dass die Signale identisch sind. Stattdessen können die Signale auch invertiert oder zeitlich verzögert sein. Maßgeblich ist, dass sich aus der zeitliche Abfolge von Flanken am Ausgangsport immer noch ein Rückschluss auf den Messwert ziehen lässt. Das heißt, solange sich eine bestimmte Frequenz bei der Abfolge von Flanken einem Messwert zuordnen lässt, ist die Bedingung erfüllt, dass eine Änderung eines logischen Zustands an einem Eingangsport eine Änderung eines logischen Zustands an einem Ausgangsport bewirkt.

Damit ist die Aufgabe vollständig gelöst.

Bei einer vorteilhaften Ausgestaltung der Erfindung weist die Logikschaltung auf:
- ein erstes digitales Element, das den ersten Eingangsport, den ersten Ausgangsport und einen vierten Eingangsport aufweist, wobei das erste Element dafür ausgebildet ist, bei einer Änderung des Zustands am ersten oder am zweiten Eingangsport den Zustand am ersten Ausgangsport zu ändern,
- ein zweites digitales Element, das den zweiten und den dritten Eingangsport und einen zweiten Ausgangsport aufweist, wobei das zweite digitale Element dafür ausgebildet ist, sofern am zweiten Eingangsport ein erster logischer Zustand anliegt, bei einer Änderung des logischen Zustands am dritten Eingangsport eine Änderung des logischen Zustands am ersten Ausgangsport hervorzurufen, und dafür ausgebildet ist, sofern am zweiten Eingangsport ein zweiter logischer Zustand anliegt, der vom ersten logischen Zustand verschieden ist, den logischen Zustands am ersten Ausgangsport konstant zu halten, auch wenn sich der logische Zustand am dritten Eingangsport ändert,
wobei der zweite Ausgangsport mit dem vierten Eingangsport logisch derart verbunden ist, so dass eine Änderung des logischen Zustands am zweiten Ausgangsport zu einer Änderung des logischen Zustands am dritten Eingangsport führt.

Die Funktion des ersten Elements ist, den Zustand am ersten Ausgangsport zu ändern, wenn sich am ersten oder am vierten Eingangsport der Zustand ändert. Darunter soll insbesondere verstanden werden, dass sich der Zustand des ersten Ausgangsports nur dann ändert, wenn sich entweder der Zustand am ersten Eingangsport oder der Zustand am vierten Eingangsport ändert, nicht aber, wenn sich beide Zustände gleichzeitig ändern.

Ein solches erstes Element bietet den Vorteil, dass es für Änderungen am ersten Eingangsport transparent ist, wenn der Zustand am vierten Eingangsport konstant ist und dass es für Änderungen am vierten Eingangsport transparent ist, wenn der Zustand des ersten Eingangsports konstant ist. Unter dem Begriff "transparent" soll dabei verstanden werden, dass eine Änderung des logischen Zustands an dem jeweiligen Eingangsport zu einer Änderung des logischen Zustands am Ausgangsport des Elements führt.

Konkret bedeutet dies insbesondere, dass ein erstes Informationssignal am ersten Eingangsport ein entsprechendes Informationssignal am ersten Ausgangsport hervorruft, wenn der Zustand des vierten Eingangsports konstant ist. Liegt ein zweites Informationssignal am vierten Eingangsport an, so wird ein entsprechendes Informationssignal am ersten Ausgangsport generiert, wenn der Zustand des ersten Eingangsports konstant ist. Damit lassen sich wahlweise ein erstes oder ein zweites Informationssignal transparent auf den ersten Ausgangsport schalten.

Dabei ist es nicht erforderlich, dass das Informationssignal am Ausgang zum Informationssignal am Eingang identisch ist. So ist es insbesondere unproblematisch, wenn das Informationssignal am Ausgang eine andere Amplitude aufweist als das Informationssignal am Eingang. Ferner kann das Informationssignal am Ausgang auch invertiert oder insgesamt zeitverzögert sein. Es ist im Rahmen der Erfindung lediglich erforderlich, dass das Informationssignal am Ausgang dieselbe zeitliche Abfolge von Signaländerungen, insbesondere Flanken, hat wie das Informationssignal am Eingang.

Die Funktion des zweiten digitalen Elements ist, in Verbindung mit dem Rückkopplungspfad, ein Signal am zweiten Ausgangsport hervorzurufen, das sich in Abhängigkeit von der Impedanz des Rückkopplungspfads ändert, insbesondere im Hinblick auf die Frequenz. Dabei bietet das zweite Element zudem die Besonderheit, dass es über den zweiten Eingangsport aktiv bzw. passiv geschaltet werden kann. Dabei ist es insbesondere vorteilhaft, dass beliebige Änderungen am dritten Eingangsport keine Zustandsänderung am zweiten Ausgangsport hervorrufen, sofern nicht am zweiten Eingangsport ein erster logischer Zustand gegeben ist. Ob dieser Zustand als "0" oder "1" festgelegt wird, hängt von der entsprechenden Ausgestaltung der Logik ab.

Die Möglichkeit, das zweite Element wahlweise aktiv oder passiv zu schalten, führt im Zusammenspiel mit dem ersten Element zu einer besonderen Funktionsweise. Wird das zweite Element passiv geschaltet, so bleibt der vierte Eingangsport des ersten Elements in einem gleichbleibenden Zustand. Dies ermöglicht es, ein Informationssignal an den ersten Eingangsport des ersten Elements zu führen und am ersten Ausgangsport ein entsprechendes Informationssignal hervorzurufen, ohne dass eine Störung durch ein Signal am zweiten Eingangsport hervorgerufen wird. Ist das zweite Element aktiv, so wird ein Informationssignal am zweiten Ausgangsport generiert, das dann am vierten Eingangsport des ersten Elements anliegt. So wird dieses Informationssignal bei konstantem Zustand am ersten Eingangsport in entsprechender Weise am ersten Ausgangsport ausgegeben.

Bei einer weiteren vorteilhaften Ausgestaltung der Erfindung ist das erste digitale Element als XOR-Element ausgebildet.

Diese Ausführungsform ist besonders kostengünstig und bietet eine besonders hohe Zuverlässigkeit.

Bei einer weiteren vorteilhaften Ausgestaltung der Erfindung ist das zweite digitale Element als AND-Element ausgebildet ist, wobei der dritte Eingangsport negiert ist.

Auch diese Ausgestaltung ist besonders kostengünstig zu realisieren und ist besonders zuverlässig. Dies gilt insbesondere bei gleichzeitiger Verwendung des zuvor genannten XOR-Elements.

Bei einer weiteren vorteilhaften Ausgestaltung der Erfindung weist die Impedanz ein resistives Element auf, das in Reihe im Rückkopplungspfad angeordnet ist, und/oder weist ein kapazitives Element auf, das an den Rückkopplungspfad angeschlossen und gegen Masse geführt ist.

Grundsätzlich ist es ausreichend, dass lediglich ein Element, sei es das resistive Element oder das kapazitive Element, im Rückkopplungspfad angeordnet ist. Da der Rückkopplungspfad prinzipbedingt immer einen gewissen Widerstand und eine gewisse Kapazität hat, ist es ausreichend, ein Element im Rückkopplungspfad zu haben, welches die Impedanz im Rückkopplungspfad in Abhängigkeit von dem Messwert ändert. Weist der Rückkopplungspfad bereits an sich entweder ein resistives Element oder ein kapazitives Element auf, das einen von dem Messwert abhängigen Wert hat, so ist es nicht erforderlich, ein weiteres Element vorzusehen.

Wird beispielsweise eine Leitung im Rückkopplungspfad verwendet, deren Widerstand und/oder Kapazität sich in Abhängigkeit von dem Messwert ändert, so muss kein zusätzliches diskretes Element vorgesehen werden, da der Rückkopplungspfad bereits an sich eine Zeitkonstante hat, die von dem Messwert abhängig ist. Es sei darauf hingewiesen, dass die Impedanz selbstverständlich auch induktive Anteile aufweisen kann oder sogar nur aus einer Induktivität besteht. Daher kann die Impedanz auch durch jegliches Element bzw. Bauteil realisiert sein, dessen resistive und/oder kapazitive und/oder induktive Anteile von dem Messwert abhängig sind.

Bei einer weiteren vorteilhaften Ausgestaltung der Erfindung ist vor dem dritten Eingangsport oder im dritten Eingangsport ein Hystereseelement angeordnet oder ist der dritte Eingangsport mit einer Hystereseeigenschaft ausgebildet.

Auf diese Weise kann besonders einfach beeinflusst werden, in welchem Bereich die Variabilität der Zeitkonstanten im Rückkopplungspfad stattfindet. Dabei gilt im Allgemeinen, dass sich die Zeitkonstante des Rückkopplungspfads erhöht, je größer der Abstand zwischen dem oberen und dem unteren Schaltpunkt der Hysterese ist. Das Hystereseelement wird dabei vorteilhafterweise durch einen Schmitt-Trigger realisiert. Dabei ist es besonders vorteilhaft, wenn der dritte Eingangsport des zweiten Elements den Schmitt-Trigger aufweist oder der dritte Eingangsport die Eigenschaft eines Schmitt-Triggers hat.

Bei einer weiteren vorteilhaften Ausgestaltung der Erfindung weist die Vorrichtung mehrere Impedanzen auf, die mittels eines Auswahlelements selektiv in den Rückkopplungspfad geschaltet werden.

Diese Ausgestaltung hat den Vorteil, dass mit einer Vorrichtung mehrere Messwerte erfasst werden können. Dabei steht jede Impedanz in Korrelation zu einer gewünschten Messgröße. Soll dann der Messwert einer bestimmten Messgröße ermittelt werden, so wird mittels des Auswahlelements die entsprechende Impedanz in den Rückkopplungspfad geschaltet und dann anhand des oben beschriebenen Verfahrens der Messwert ermittelt. Soll dann eine andere Messgröße ermittelt werden, so wird die andere entsprechende Impedanz in den Rückkopplungspfad geschaltet und der Messwert der anderen Messgröße ermittelt.

Eine besonders bevorzugte Anwendung sieht so aus, dass mehreren Bedienfeldern eines Bedienelements jeweils eine Impedanz zugeordnet ist. Soll dann ermittelt werden, ob beispielsweise die Annäherung eines Fingers an eines der Bedienfelder stattfindet oder ob eines der Bedienfelder berührt bzw. gedrückt wurde, kann dies auf einfache Weise dadurch erreicht werden, dass die einzelnen Impedanzen abwechselnd in den Rückkopplungspfad geschaltet werden und die jeweiligen Messwerte ausgewertet werden. Das Auswahlelement ist dabei vorzugsweise als Multiplexer ausgeführt.

Bei einer weiteren vorteilhaften Ausgestaltung der Erfindung ist am dritten Eingangsport ein Ableitelement angeordnet, das dafür ausgebildet ist, den Rückkopplungspfad zeitweise hochohmig oder gegen Masse zu schalten.

Dies ermöglicht eine vereinfachte Realisierung der Vorrichtung, die noch anhand eines Ausführungsbeispiels erläutert wird.

Bei einer weiteren vorteilhaften Ausgestaltung der Erfindung ist das zweite Element mit dem Rückkopplungspfad zu einem Oszillator, insbesondere einem Relaxationsoszillator, ausgebildet.

Diese Ausgestaltung ermöglicht eine besonders einfache Realisierung der Zuordnung zwischen dem zu ermittelnden Messwert und der resultierenden Frequenz im Rückkopplungspfad bzw. am zweiten Ausgangsport.

Bei einer weiteren vorteilhaften Ausgestaltung der Erfindung ist die Impedanz zumindest teilweise als Elektrode ausgebildet.

Diese Ausgestaltung ermöglicht es auf besonders einfache Weise, eine Annäherung an ein Bedienelement zu messen, das die Elektrode aufweist. Nähert sich dem Bedienelement - und damit der Elektrode - ein Finger, so ändert sich die Kapazität der Impedanz, und es ergibt sich im Rückkopplungspfad eine bestimmte Zeitkonstante. In Abhängigkeit von der Größe der Zeitkonstante bzw. in Abhängigkeit von der ermittelten Frequenz im Rückkopplungspfad kann dann ermittelt werden, wie nah sich der Finger am Bedienelement befindet. Außerdem kann auch ermittelt werden, ob eine Berührung stattgefunden hat, da dies zu einer weiteren schlagartigen Kapazitätsänderung führt.

Gemäß einem zweiten Aspekt der Erfindung wird die Aufgabe durch eine Reihenschaltung mit mindestens einer ersten und einer zweiten Vorrichtung gelöst, die Vorrichtungen jeweils in der zuvor beschriebenen Art, wobei der Ausgang der ersten Vorrichtung mit dem Eingang der zweiten Vorrichtung elektrisch verbunden ist.

Wie bereits erläutert wurde, eignet sich die beschriebene Vorrichtung sehr gut für eine Reihenschaltung. Eine Reihenschaltung lässt sich besonders einfach realisieren, da keine weiteren Elemente erforderlich sind, um die Funktionalität der Reihenschaltung zu bewirken, als die Elemente, die für eine einzelne Vorrichtung benötigt werden. Vorteilhafterweise ist aber eine koordinierte Ansteuerung vorgesehen, die jeweils nur ein zweites Element in der Reihenschaltung aktiv schaltet. Es ist insbesondere vorteilhaft, wenn mindestens drei Vorrichtungen in der genannten Weise in Reihe geschaltet werden.

Bei einer vorteilhaften Ausgestaltung der Erfindung weist mindestens eine Vorrichtung der Reihenschaltung mehrere Impedanzen auf, die mittels eines Auswahlelements selektiv in den Rückkopplungspfad geschaltet werden.

Diese Ausgestaltung zeigt auf, dass es in vorteilhafter Weise möglich ohne besondere technische Maßnahmen möglich ist, sowohl eine Vorrichtung bzw. Vorrichtungen mit einer Impedanz als auch eine Vorrichtung bzw. Vorrichtungen mit mehreren Impedanzen in Reihe zu schalten.

Gemäß einem dritten Aspekt der Erfindung wird die Aufgabe durch ein System zum Erfassen und Übertragen von Messwerten gelöst, insbesondere von Messwerten, die eine Annäherung oder Berührung bezogen auf Sensorelemente anzeigen, mit einer Reihenschaltung der zuvor beschriebenen Art und mit einer Steuereinrichtung, die mindestens zwei Aktivierungsausgänge aufweist, die jeweils mit dem zweiten Eingangsport einer jeweiligen Vorrichtung verbunden sind, und die einen Empfangsport aufweist, der mit dem ersten Ausgangsport der letzten Vorrichtung in der Reihenschaltung verbunden ist.

Die Funktionsweise eines solchen Systems wird noch anhand eines Ausführungsbeispiels näher erläutert. Das System hat über die Aktivierungsausgänge die Möglichkeit, jeweils ein gewünschtes zweites Element in einer Vorrichtung aktiv zu schalten. Durch die Aktivierung findet in der entsprechenden Vorrichtung eine Schwingung im Rückkopplungspfad statt, die zu einem Informationssignal mit einer bestimmten Frequenz am Ausgang der entsprechenden Vorrichtung führt. Aufgrund der oben beschriebenen Eigenschaft des ersten Elements wird dieses Informationssignal durch alle weiteren Vorrichtungen bis hin zum Empfangsport der Steuereinrichtung weitergeleitet. Da die Steuereinrichtung weiß, welches zweite Element sie aktiviert hat, kann sie nun durch Auswertung der Frequenz des Informationssignals den Messwert der entsprechenden Messgröße ermitteln.

Bei einer weiteren vorteilhaften Ausgestaltung der Erfindung ist die Steuereinrichtung dafür ausgebildet, eine Anzahl von Flankenwechseln am Empfangsport je Zeiteinheit zu ermitteln und bevorzugt den dadurch signalisierten Messwert zu bestimmen.

Aus der Anzahl von Flankenwechseln je Zeiteinheit kann die Frequenz des Informationssignals am Empfangsport abgelesen werden. Da der Steuereinrichtung bekannt ist, aufgrund welcher Impedanz diese Frequenz erzeugt wurde, kann der entsprechende Messwert berechnet oder in einer Nachschlage-Tabelle abgefragt werden.

Gemäß einem vierten Aspekt der vorliegenden Erfindung wird die Aufgabe durch ein Haushaltsgerät gelöst, das eine zuvor beschriebene Vorrichtung oder eine zuvor beschriebene Reihenschaltung oder ein zuvor beschriebenes System aufweist, wobei die Impedanz zumindest teilweise durch ein Sensorelement oder eine Taste ausgebildet ist, so dass eine Annäherung oder eine Berührung des Sensorelements oder eine Betätigung der Taste erfasst werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein erstes Ausführungsbeispiel einer Vorrichtung;
- Fig. 2: ein zweites Ausführungsbeispiel einer Vorrichtung;
- Fig. 3: eine erste Ausführungsform eines Systems mit einer Reihenschaltung gemäß einer ersten Ausführungsform;
- Fig. 4a: eine zweite Ausführungsform einer Reihenschaltung zu einem Zeitpunkt, zu dem beide zweite Elemente passiv sind;
- Fig. 4b: die Reihenschaltung gemäß Fig. 4a zu einem Zeitpunkt, zu dem das zweite Element der ersten Vorrichtung aktiv geschaltet wird;
- Fig. 4c: die Reihenschaltung gemäß Fig. 4a zu einem Zeitpunkt, zu dem ein erster Wechsel am dritten Eingangsport der ersten Vorrichtung stattgefunden hat;
- Fig. 4d: die Reihenschaltung gemäß Fig. 4a zu einem Zeitpunkt, zu dem ein zweiter Wechsel am dritten Eingangsport der ersten Vorrichtung stattgefunden hat;
- Fig. 4e: die Reihenschaltung gemäß Fig. 4a zu einem Zeitpunkt, zu dem das zweite Element der ersten Vorrichtung wieder passiv geschaltet ist;
- Fig. 5: eine dritte Ausführungsform einer Vorrichtung;
- Fig. 6: eine vierte Ausführungsform einer Vorrichtung;
- Fig. 7: eine fünfte Ausführungsform einer Vorrichtung; und
- Fig. 8: eine sechste Ausführungsform einer Vorrichtung.

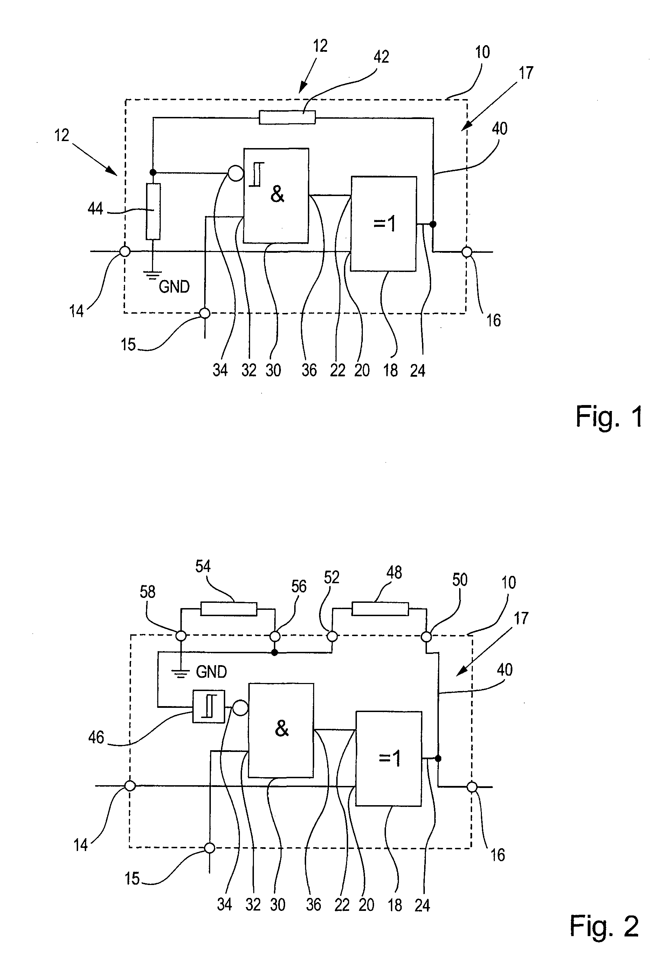

Fig. 1 zeigt eine Vorrichtung 10 zum Erfassen und Übertragen eines Messwerts, insbesondere eines Messwerts, der eine Annäherung oder Berührung bezogen auf mindestens ein Sensorelement anzeigt. Die Vorrichtung 10 weist einen Eingang 14, einen Aktivierungseingang 15, einen Ausgang 16 und eine Logikschaltung 17 auf.

Die Vorrichtung 10 hat ein erstes digitales Element 18 mit einem ersten Eingangsport 20, einem vierten Eingangsport 22 und einem ersten Ausgangsport 24. Das erste Element 18 ist dafür ausgebildet, bei einer Änderung des Zustands am ersten oder am zweiten Eingangsport 20, 22 den Zustand am ersten Ausgangsport 24 zu ändern. Dafür ist das erste Element 18 vorzugsweise, wie hier gezeigt, als XOR-Element ausgebildet. Die Übertragungsfunktion des ersten Elements 18 ist hier wie folgt gewählt:

| Erster Eingangsport 20 | Vierter Eingangsport 22 | Erster Ausgangsport 24 |
|---|---|---|
| 0 | 0 | 0 |
| 0 | 1 | 1 |
| 1 | 0 | 1 |
| 1 | 1 | 0 |

Der erste Eingangsport 20 ist mit dem Eingang 14 und der erste Ausgangsport 24 ist mit dem Ausgang 16 elektrisch verbunden.

Die Vorrichtung 10 weist außerdem ein zweites digitales Element 30 mit einem zweiten Eingangsport 32, einem dritten Eingangsport 34 und einem zweiten Ausgangsport 36 auf. Das zweite Element 30 ist dafür ausgebildet, dass - sofern am zweiten Eingangsport 32 ein zweiter logischer Zustand anliegt - Änderungen des logischen Zustands am dritten Eingangsport 34 zu Änderungen des logischen Zustands am zweiten Ausgangsport 36 führen.

Ferner ist das zweite Element 30 dafür ausgebildet, dass - sofern am zweiten Eingangsport 32 ein erster logischer Zustand anliegt - eine Änderung eines logischen Zustands am ersten Eingangsport 20 eine Änderung eines logischen Zustands am ersten Ausgangsport 24 hervorruft und eine Änderung eines logischen Zustands am dritten Eingangsport 34 keine Änderung des logischen Zustands am ersten Ausgangsport 24 hervorruft.

Das zweite Element 30 ist vorzugsweise als AND-Element ausgebildet, wobei der dritten Eingangsport 32 negiert ist, und hat in der hier gezeigten Ausführungsform folgende Übertragungsfunktionen:

| Zweiter Eingangsport 32 | Dritter Eingangsport 34 | Zweiter Ausgangsport 36 |
|---|---|---|
| 0 | 0 | 0 |
| 0 | 1 | 0 |
| 1 | 0 | 1 |
| 1 | 1 | 0 |

Der erste Ausgangsport 24 ist mit dem Ausgang 16 verbunden. Soll ein Messwert von der Vorrichtung 10 ermittelt werden, wird das Signal am Eingang 14 bzw. am ersten Eingangsport 20 konstant gehalten, so dass das erste Element 18 ein Signal an seinem ersten Ausgangsport 24 erzeugt, das dem Signal an seinem vierten Eingangsport 22 entspricht. Das erste Element 18 ist also transparent für das Signal, das am zweiten Ausgangsport 36 bereitgestellt wird.

Die Vorrichtung 10 weist ferner einen Rückkopplungspfad 40 auf, der eine Verbindung zwischen dem ersten Ausgangsport 24 und dem dritten Eingangsport 34 bildet und der dafür ausgebildet ist, eine Änderung des Zustands des zweiten Ausgangsports 36 mit einer Zeitkonstanten v verzögert auf den dritten Eingangsport 34 zurückzukoppeln. Wie noch erläutert wird, kann die Verbindung auch zwischen dem zweiten Ausgangsport 36 und dem dritten Eingangsport 34 ausbildet werden.

Der Rückkopplungspfad 40 weist eine Impedanz 12 auf, die dafür ausgebildet ist, sich in Abhängigkeit von dem erfassten Messwert zu ändern und dadurch die Zeitkonstante v der Rückkopplung im Rückkopplungspfad 40 zu ändern.

Bei der hier gezeigten Ausführungsform weist die Impedanz 12 ein resistives Element 42 auf, das in Reihe im Rückkopplungspfad 40 angeordnet ist, und ein kapazitives Element 44, das an den Rückkopplungspfad 40 angeschlossen und gegen Masse GND geführt ist. Es sei aber ausdrücklich darauf hingewiesen, dass es grundsätzlich ausreichend ist, die Impedanz 12 mittels eines einzigen Elements zu realisieren, sofern sich der Impedanzwert der Impedanz 12 bei einer Änderung des Messwerts ändert und sich damit die Zeitkonstante v der Rückkopplung im Rückkopplungspfad 40 ändert.

Wie anhand des Hysterese-Symbols im zweiten Element 30 angedeutet ist, ist der dritte Eingangsport 34 mit einer Hystereseeigenschaft ausgebildet. Dadurch lassen sich die Eigenschaften des Schwingkreises mit der Impedanz 12 besonders gut kontrollieren. Grundsätzlich ist es aber auch möglich, vor dem (oder in dem) dritten Eingangsport 34 ein Hystereseelement 46 anzuordnen (siehe Fig. 2).

Die hier gezeigte Ausführungsform ist so ausgelegt, dass der erste Ausgangsport 24 und der zweite Ausgangsport 36 jeweils entweder den logischen Zustand "0" oder den logischen Zustand "1" einnehmen können.

Das zweite Element 30 mit dem Rückkopplungspfad 40 ist zu einem Oszillator, insbesondere einem Relaxationsoszillator, ausgebildet, wie sich aus der nachfolgend beschriebenen Funktionsweise der Vorrichtung 10 ergibt.

Wenn am Aktivierungseingang 15 eine logische "0" anliegt, wird - unabhängig vom Zustand des dritten Eingangsports 34 - immer eine logische "0" am zweiten Ausgangsport 36 ausgegeben.

Die logische "0", die am zweiten Ausgangsport 36 ausgegeben wird, wird auf den dritten Eingangsport 34 über den Rückkopplungspfad 40 zurückgekoppelt. Dies ist ein stabiler Zustand, da aufgrund der logischen "0" am zweiten Eingangsport 32 immer eine logische "0" am zweiten Ausgangsport 36 ausgegeben wird.

Die im Ruhezustand konstante logische "0" am zweiten Ausgangsport 36 liegt gleichzeitig am vierten Eingangsport 22 des ersten Elements 18 an. Dadurch ist das erste Element 18 transparent für ein Informationssignal, das am ersten Eingangsport 20 anliegt und an den ersten Ausgangsport 24 weitergegeben wird. Konkret bedeutet dies, dass ein Informationssignal, das am Eingang 14 der Vorrichtung 10 anliegt, über das erste Element 18 am Ausgang 16 ausgegeben wird. Wie bereits eingangs erläutert ist es nicht erforderlich, dass das Informationssignal am Ausgang 16 identisch ist zum Informationssignal am Eingang 14. Es ist im Rahmen der Erfindung lediglich erforderlich, dass das Informationssignal am Ausgang 16 dieselbe zeitliche Abfolge von Signaländerungen, insbesondere Flanken, hat wie das Informationssignal am Eingang 14.

Wenn an den Aktivierungseingang 15 eine logische "1" angelegt wird, stellt sich nun - aufgrund der logischen "0" am dritten Eingangsport 34 - eine logische "1" am zweiten Ausgangsport 36 ein. Da der logische Zustand am ersten Eingangsport 20 konstant gehalten wird, führt die Änderung am zweiten Ausgangsport 36 von "0" nach "1" zu einer Änderung am ersten Ausgangsport 24: Liegt am ersten Eingangsport 20 eine logische "0" an, so ändert sich der zweite Ausgangsport 24 von "0" auf "1"; liegt am ersten Eingangsport 20 eine logische "1" an, so ändert sich der Zustand des ersten Ausgangsports 24 von "1" auf "0".

Gleichzeitig wird die logische "0" vom zweiten Ausgangsport 36 über den Rückkopplungspfad 40 um die Zeitkonstante v verzögert auf den dritten Eingangsport 34 zurückgekoppelt. Das heißt, der Pegel am dritten Eingangsport 34 beginnt von der logischen "1" in Richtung der logischen "0" abzusinken. Wird die Spannung am dritten Eingangsport 34 als logische "0" verstanden, verändert sich der Zustand des zweiten Ausgangsports 36 von "0" auf "1".

Die logische "1" am zweiten Ausgangsport 36 liegt unmittelbar am zweiten Eingangsport 22 an und führt zu einer erneuten Zustandsänderung, insbesondere zu einer Flanke, am ersten Ausgangsport 24 und am Ausgang 16. Die logische "1" am ersten Ausgangsport 24 wird wiederum um die Zeitkonstante v verzögert auf den dritten Eingangsport 34 zurückgekoppelt. Konkret bedeutet dies, dass die Spannung am dritten Eingangsport 34 nun in Richtung der logischen "1" läuft. Wird der entsprechende Schwellenwert für "1" überschritten, so wird dies vom zweiten Element 30 im Sinne einer logischen "1" verstanden, und es findet erneut eine Zustandsänderung am zweiten Ausgangsport 36 von "1" nach "0" statt.

In Abhängigkeit vom konkreten Wert der Impedanz 12 und der damit verbundenen Zeitkonstante v wird am Ausgang 16 eine Abfolge von Signaländerungen, insbesondere Flanken, erzeugt, die in ihrer Frequenz eine Information über den zu ermittelnden Messwert trägt.

Wird der Aktivierungseingang 15 wieder auf "0" geschaltet, so stellt sich sowohl am zweiten Ausgangsport 36 als auch - gegebenenfalls zeitverzögert - am dritten Eingangsport 34 eine logische "0" ein. Damit hört die Schwingung im Rückkopplungspfad 40 auf, und der vierte Eingangsport 22 des ersten Elements 18 hat einen konstanten Zustand. Damit ist es bei Bedarf nun erneut möglich, ein Informationssignal vom Eingang 14 zum Ausgang 16 zu übertragen.

Fig. 2 zeigt eine zweite Ausführungsform einer Vorrichtung 10. Die Impedanz 12 ist hier so realisiert, dass eine erste Teilimpedanz 48 an Anschlüssen 50, 52 angeschlossen ist und in Reihe im Rückkopplungspfad 40 liegt. Die erste Teilimpedanz 48 kann insbesondere wie das resistive Element 42 ausgebildet sein. Eine zweite Teilimpedanz 54 ist an Anschlüssen 56, 58 einerseits an den Rückkopplungspfad 40 und andererseits an einen Masseanschluss GND angeschlossen. Die zweite Teilimpedanz 54 kann dabei insbesondere wie das kapazitive Element 44 ausgeführt sein.

Es ist zu erkennen, dass die Impedanz 12 auf besonders einfache Weise geändert bzw. angepasst werden kann. Sowohl die erste Teilimpedanz 48 als auch die zweite Teilimpedanz 54 können weggelassen werden, wobei die zweite Teilimpedanz 48 insbesondere durch einen flächigen Leiter ersetzt werden kann, der bereits physikalisch bedingt resistive, d.h. ohmsche, und kapazitive Eigenschaften hat.

Ferner zeigt diese zweite Ausführungsform, wie bereits oben erläutert, dass vor dem dritten Eingangsport 34 ein Hystereseelement 46 angeordnet werden kann.

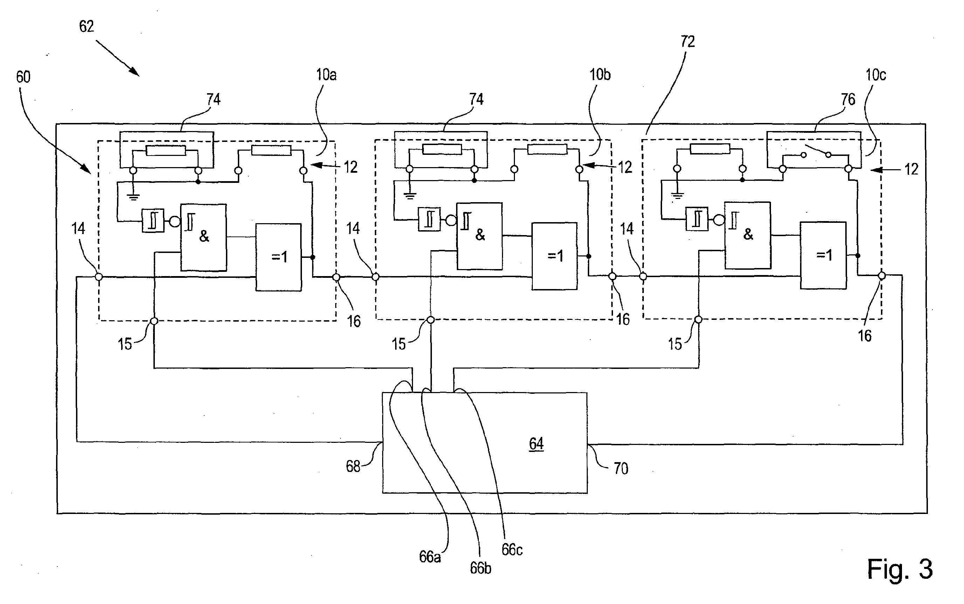

Fig. 3 zeigt eine Reihenschaltung aus einer ersten, einer zweiten und einer dritten Vorrichtung 10a, 10b, 10c in einem System 62 zum Erfassen und Übertragen von Messwerten, insbesondere von Messwerten, die eine Annäherung oder Berührung bezogen auf Sensorelemente anzeigen.

Die Vorrichtungen 10a, 10b, 10c sind hier Teil einen Haushaltsgeräts 72. Die Impedanzen 12 der Vorrichtungen 10a, 10b sind jeweils Teil eines Sensorelements 74 und als Elektroden ausgebildet. Die Impedanz 12 der Vorrichtung 10c ist Teil einer Taste 76.

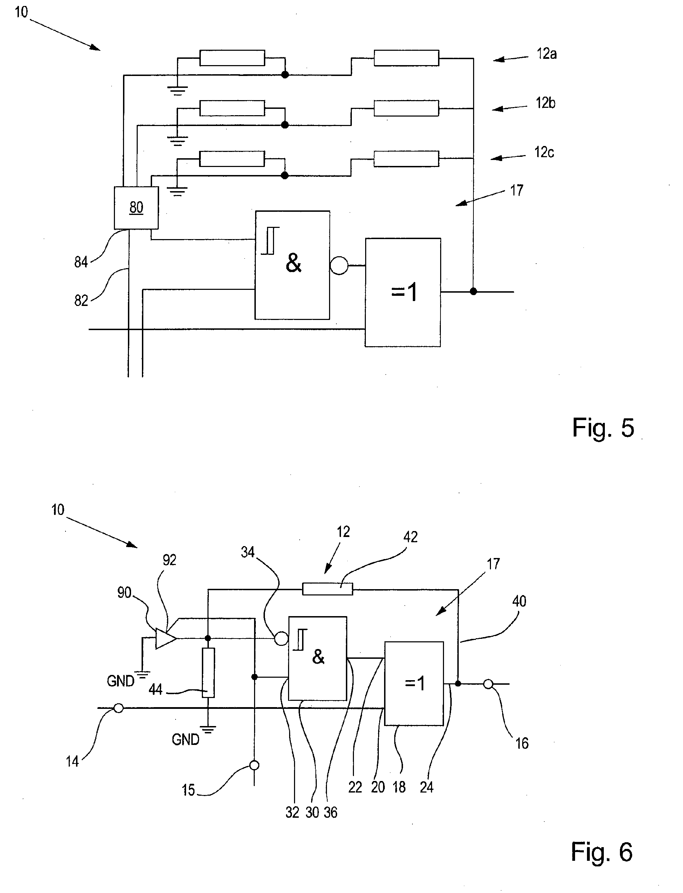

Die Vorrichtungen 10a, 10b, 10c sind hier prinzipiell gleich ausgeführt, wobei aber jede Vorrichtung 10a, 10b, 10c eine entsprechend angepasste Impedanz 12 aufweist. Grundsätzlich ist es aber auch möglich, dass die Impedanzen 12 unterschiedlich ausgeführt sind und/oder unterschiedliche Messgrößen erfassen. Außerdem können die Vorrichtungen 10a, 10b, 10c auch unterschiedlicher Bauart sein, wobei insbesondere eine oder mehrere Vorrichtungen 10a, 10b, 10c gemäß einer dritten Ausführungsform (siehe Fig. 5) ausgeführt sein können.

Das System 62 weist eine Steuereinrichtung 64 auf, die einen ersten, einen zweiten und einen dritten Aktivierungsausgang 66a, 66b, 66c aufweist, die jeweils mit einem Aktivierungseingang 15 bzw. einem zweiten Eingangsport 32 einer jeweiligen Vorrichtung 10a, 10b, 10c verbunden sind.

Die Steuereinrichtung 64 weist außerdem einen Sendeport 68 und einen Empfangsport 70 auf. Der Sendeport 68 ist mit dem Eingang 14 der ersten Vorrichtung 10a verbunden. Der Ausgang 16 der ersten Vorrichtung 10a ist mit dem Eingang 14 der zweiten Vorrichtung 10b verbunden. Der Ausgang 16 der zweiten Vorrichtung 10b ist mit dem Eingang 14 der dritten bzw. der letzten Vorrichtung 10c in der Reihenschaltung 60 verbunden. Der Ausgang 16 der letzten Vorrichtung 10c ist mit dem Empfangsport 70 der Steuereinrichtung 64 verbunden.

Wenn alle Aktivierungsausgänge 66a, 66b, 66c ruhen, insbesondere eine logische "0" ausgeben, sind alle zweiten Elemente 30 der Vorrichtungen 10a, 10b, 10c passiv. Dieser Zustand kann für einen Funktionstest verwendet werden. Dafür wird aus dem Sendeport 68 ein Testsignal gesendet, welches durch alle Vorrichtungen 10a, 10b, 10c hindurchgeführt wird und schließlich wieder am Empfangsport 70 empfangen wird. Entspricht das am Empfangsport 70 empfangene Signal nicht dem erwarteten Signal, so ist von einem Defekt im System 62, insbesondere in der Reihenschaltung 60, auszugehen.

Um die Messwerte an den einzelnen Vorrichtungen 10a, 10b, 10c abfragen zu können, wird der Sendeport 68 auf einen konstanten Zustand, insbesondere auf eine logische "0" geschaltet. Danach aktiviert die Steuereinrichtung 64 den ersten Aktivierungsausgang 66a, insbesondere mittels einer logischen "1". Über den Aktivierungseingang 15 und den zweiten Eingangsport 32 wird das zweite Element 30 der ersten Vorrichtung 10a nun aktiv geschaltet.

Im Rückkopplungspfad 40 der ersten Vorrichtung 10a stellt sich aufgrund des zuvor beschriebenen Funktionsprinzips eine Schwingung ein, die schließlich am Ausgang 16 ausgegeben wird. Da die zweiten Elemente 30 der anderen Vorrichtungen 10b, 10c passiv geschaltet sind, wird die Information im Signal aus der ersten Vorrichtung 10a durch die anderen Vorrichtungen 10b, 10c geführt und erreicht schließlich den Empfangsport 70. Die Steuereinrichtung 64 ist dafür ausgebildet, eine Anzahl von Flankenwechseln am Empfangsport 70 je Zeiteinheit zu ermitteln und bevorzugt den dadurch signalisierten Messwert zu bestimmen.

Sobald der Messwert aus der ersten Vorrichtung 10a ermittelt ist, wird der erste Aktivierungsausgang 66a abgeschaltet, insbesondere auf eine logische "0", so dass das zweite Element 30 der ersten Vorrichtung 10a passiv geschaltet wird. Am Ausgang 16 der ersten Vorrichtung 10a wird nun wieder ein konstanter Zustand ausgegeben. Die Steuereinrichtung 64 schaltet nun den zweiten Aktivierungsausgang 66b aktiv, insbesondere auf eine logische "1", so dass nun der gerade beschriebene Vorgang in der zweiten Vorrichtung 10b stattfindet. In gleicher Weise kann dann der Messwert aus der letzten Vorrichtung 10c ermittelt werden.

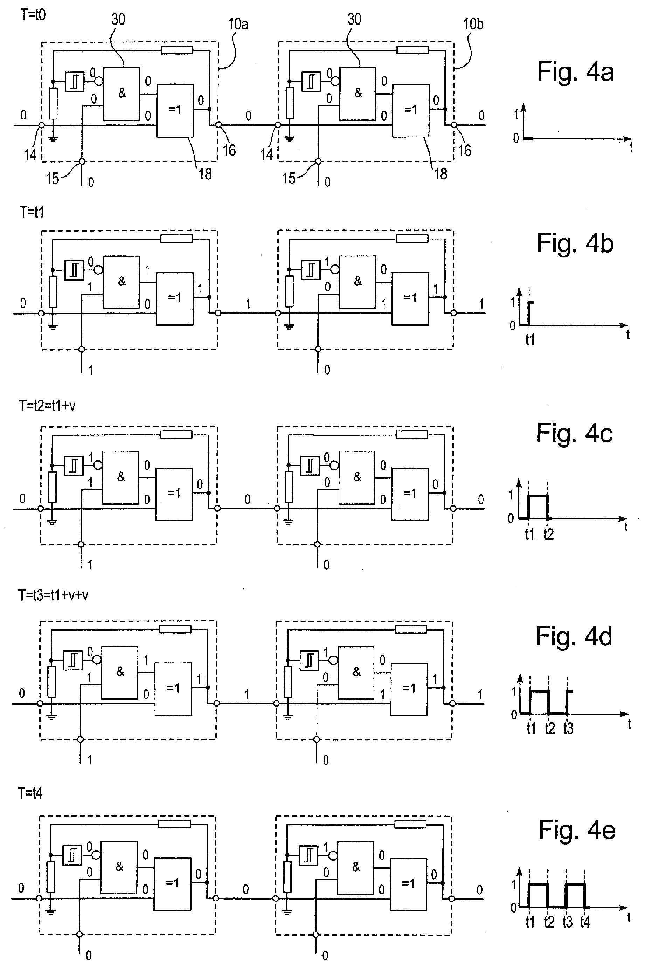

Anhand der Fig. 4a bis 4e wird nun erläutert, wie eine erste Vorrichtung 10a im Zusammenspiel mit einer zweiten Vorrichtung 10b insbesondere funktioniert. Zum Zwecke der Übersichtlichkeit wurden nur wenige Bezugszeichen eingezeichnet. Die Bezugszeichen werden aber weiterhin so verwendet, wie sie im Zusammenhang mit den vorherigen Figuren eingeführt worden sind.

Fig. 4a zeigt den Ruhezustand, bei dem beide zweiten Elemente 30 passiv geschaltet sind. An allen Eingängen und Ausgängen liegen konstante Zustände vor. In dem hier gezeigten Beispiel wird am Ausgang 16 der zweiten Vorrichtung 10b eine logische "0" ausgegeben. Der zeitliche Verlauf des Zustands am zweiten Ausgang 16 der zweiten Vorrichtung 10b wird jeweils im rechten Teil der Figur in einem kleinen Koordinatensystem dargestellt, wobei entlang der Abszisse die Zeit und entlang der Ordinate der logische Zustand abgetragen ist.

Zu einem Zeitpunkt t1, siehe Fig. 4b, wird der Aktivierungseingang 15 der ersten Vorrichtung 10a auf "1" geschaltet. Dadurch wird das zweite Element 30 der ersten Vorrichtung 10a aktiviert, und der zweite Ausgangsport 36 der ersten Vorrichtung 10a gibt eine "1" aus. Dies führt dazu, dass sich der Zustand des ersten Ausgangsports 24 von "0" auf "1" ändert. Dies wiederum bewirkt, dass sich der erste Ausgangsport 24 der zweiten Vorrichtung 10b von "0" auf "1" ändert. Dies ist im Diagramm entsprechend dargestellt. Dabei ist zu beachten, dass sich der Zustand am dritten Eingangsport 34 der ersten Vorrichtung 10a nicht unmittelbar ändert, sondern um eine Zeitkonstante v verzögert.

Die Zeitkonstante v ist dabei abhängig vom Wert der Impedanz 12. Außerdem ist sie von der Wahl der unteren und oberen Schwellenwerte abhängig. Je weiter die Schwellenwerte auseinander liegen, anhand derer eine "0" oder eine "1" erkannt wird, desto größer wird v - eine konstante Impedanz vorausgesetzt.

In Fig. 4c ist nun die Situation dargestellt, dass zu einem Zeitpunkt t2 der Zustand am dritten Eingangsport 34 als logische "1" erkannt wird. Dies führt dazu, dass der zweite Ausgangsport 36 der ersten Vorrichtung 10a von "1" auf "0" wechselt, dass der erste Ausgangsport 24 der ersten Vorrichtung 10a von "1" auf "0" wechselt, und dass der erste Ausgangsport 24 der zweiten Vorrichtung 10b von "1" auf "0" wechselt. Dies ist entsprechend im Diagramm dargestellt.

In Fig. 4d ist dargestellt, dass es wieder eine bestimmte Zeit dauert, bevor die logische "0" am zweiten Ausgangsport 36 der ersten Vorrichtung 10a sich am dritten Eingangsport 34 der ersten Vorrichtung 10a zeigt. Wenn dies der Fall ist, führt dies dazu, dass der zweite Ausgangsport 36 der ersten Vorrichtung 10a erneut seinen Zustand ändert, nämlich von "0" auf "1". Dies führt wiederum dazu, dass sowohl der erste Ausgangsport 24 der ersten Vorrichtung 10a als auch der erste Ausgangsport 24 der zweiten Vorrichtung 10b ihren Zustand ändern. Das Ergebnis ist wiederum im Diagramm dargestellt.

Schließlich zeigt Fig. 4e, dass der Aktivierungseingang 15 der ersten Vorrichtung 10a wieder auf "0" geschaltet wird und damit das zweite Element 30 der ersten Vorrichtung 10a passiv geschaltet wird. Es stellt sich somit wieder ein Ruhezustand ein, bei dem an allen Eingängen 14 und Ausgängen 16 ein konstanter Zustand gegeben ist.

Fig. 5 zeigt eine dritte Ausführungsform einer Vorrichtung 10. Dabei weist die Vorrichtung 10 hier mehrere Impedanzen 12a, 12b, 12c auf, die mittels eines Auswahlelements 80 selektiv in den Rückkopplungspfad 40 geschaltet werden. Die Auswahl 12a, 12b, 12c erfolgt über eine Steuerleitung 82, die an einen Selektierport 84 des Auswahlelements 80 angeschlossen ist. Soll beispielsweise die erste Impedanz 12a in den Rückkopplungspfad 40 geschaltet werden, so wird dies über die Steuerleitung 82 signalisiert.

Das Auswahlelement 80, welches insbesondere als Multiplexer ausgeführt ist, verbindet dann die erste Impedanz 12a mit dem dritten Eingangsport 34 und stellt sicher, dass die anderen Impedanzen 12b, 12c vom dritten Eingangsport 34 getrennt sind. Zwar ist es grundsätzlich möglich, dass auch mehrere Impedanzen 12a, 12b, 12c gleichzeitig mit dem dritten Eingangsport 34 verbunden sind, doch wird es derzeit als vorteilhaft angesehen, wenn stets nur eine Impedanz 12a, 12b, 12c an den dritten Eingangsport 34 angeschlossen ist. So können mit einer Vorrichtung 10 mehrere Messwerte, hier drei Messwerte, nacheinander erfasst werden.

Fig. 6 zeigt eine vierte Ausführungsform einer Vorrichtung 10. Bei dieser Ausführungsform ist am dritten Eingangsport 34 ein Ableitelement 90 angeordnet, das dafür ausgebildet ist, den Rückkopplungspfad 40 zeitweise hochohmig oder gegen Masse (GND) zu schalten. Diese Ausführungsform ermöglicht einen etwas vereinfachten Aufbau gegenüber der ersten Ausführungsform gemäß Fig. 1. Auf diese Weise kann der Rückkopplungspfad 40 vom dritten Eingangsport 34 logisch "getrennt" werden, das heißt, ein Signal im Rückkopplungspfad 40 wirkt sich nicht auf den dritten Eingangsport 34 aus, so dass Änderungen im Rückkopplungspfad 40 keine Änderung im zweiten Element 30 bewirken können. Grundsätzlich ist es auch denkbar, eine Trennung im physikalischen Sinne durchzuführen, insbesondere wenn das Ableitelement 90 ein Relais ist.

Das Ableitelement 90 weist einen Freigabeeingang 92 auf, der mit dem Aktivierungseingang 15 verbunden ist. Wird der Freigabeeingang 92 aktiviert, insbesondere mittels einer logischen "1", so verbindet das Ableitelement 90 den Rückkopplungspfad 40 mit dem dritten Eingangsport 34. Ist der Freigabeeingang 92 inaktiv, insbesondere wenn eine logische "0" anliegt, ist der Rückkopplungspfad 40 vom dritten Eingangsport 34 getrennt, insbesondere, indem das Ableitelement 90 eine hochohmige Eigenschaft annimmt. Das Ableitelement 90 ist insbesondere durch einen Buffer mit Tri-State-Funktionalität realisiert.

Der Rückkopplungspfad 40 ist hier mit dem ersten Ausgangsport 24 des ersten Elements 18 verbunden. Wie bereits oben erläutert, führt eine Änderung am zweiten Ausgangsport 36 auch zu einer Änderung am ersten Ausgangsport 24, sofern - was hier angenommen wird - am ersten Eingangsport 20 ein konstanter Zustand anliegt. Damit lässt sich die Rückkopplung prinzipiell in der gleichen Weise realisieren, wie wenn der Rückkopplungspfad 40 am zweiten Ausgangsport 36 angeschlossen ist. Da das Ableitelement 90 den Rückkopplungspfad 40 vom dritten Eingangsport 34 trennt, wenn am Aktivierungseingang 15 eine logische "0" anliegt, kann ein weitergeleitetes Signal, welches ja auch Zustandsänderungen am ersten Ausgangsport 24 hervorruft, nicht zu einem Schwingvorgang im Rückkopplungspfad 40 führen.

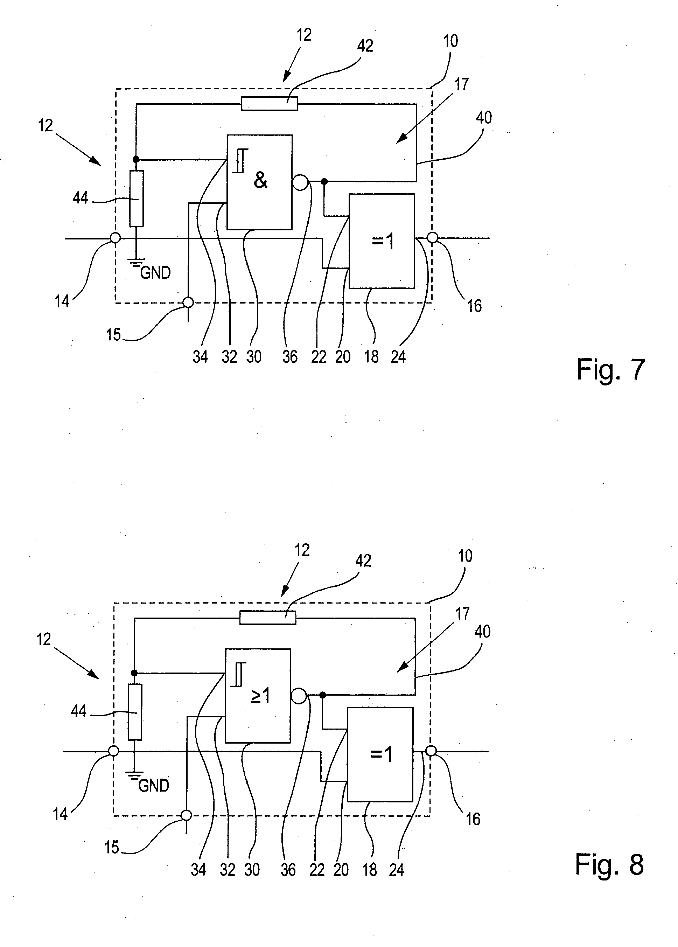

Fig. 7 zeigt auf, dass der Rückkopplungspfad 40 alternativ auch mit dem zweiten Ausgangsport 36 verbunden werden kann. Dies liegt darin begründet, dass - wenn der erste Eingangsport 20 konstant gehalten wird, eine Änderung des logischen Zustands am ersten Ausgangsport 24 auf eine Änderung des Zustands am zweiten Ausgangsport 36 zurückzuführen ist. Daher kann die Rückkopplung auch über den zweiten Ausgangsport 36 erfolgen. Da sich die Abfolge der logischen Zustände ändert, ist die Vorrichtung 10 dahingehend angepasst worden, dass nun ein AND-Element mit einem negierten Ausgang (NAND-Element) verwendet wird.

Fig. 8 zeigt auf, dass das zweite Element 30 auch als NOR-Element ausgeführt sein kann. Hier wird nun aber im Vergleich zu den vorherigen Ausführungsformen der zweite Eingangsport 32 auf "0" geschaltet, wenn eine Schwingung in der Vorrichtung 10 stattfinden soll. Soll die Schwingung unterbunden werden, wird der zweite Eingangsport 32 auf "1" geschaltet.

## Patentansprüche

1. Vorrichtung (10) zum Erfassen und Übertragen eines Messwerts, insbesondere eines Messwerts, der eine Annäherung oder Berührung bezogen auf mindestens ein Sensorelement (74) anzeigt, mit
- einer Logikschaltung (17) mit einem ersten Eingangsport (20), einem zweiten Eingangsport (32), einem dritten Eingangsport (34) und einem ersten Ausgangsport (24), und
- einem Rückkopplungspfad (40),
**dadurch gekennzeichnet, dass**
der Rückkopplungspfad (40) eine Verbindung zwischen dem ersten Ausgangsport (24) und dem dritten Eingangsport (34) bildet und der dafür ausgebildet ist, eine Änderung des Zustands des ersten Ausgangsports (24) mit einer Zeitkonstanten (v) verzögert auf den dritten Eingangsport (34) zurückzukoppeln,
der Rückkopplungspfad (40) eine Impedanz (12) aufweist, die zumindest teilweise durch ein Sensorelement (74) oder eine Taste (76) ausgebildet ist, so dass eine Annäherung oder eine Berührung des Sensorelements (74) oder eine Betätigung der Taste (76) erfasst werden kann um sich in Abhängigkeit von dem erfassten Messwert zu ändern und dadurch die Zeitkonstante (v) der Rückkopplung im Rückkopplungspfad (40) zu ändern, und
die Logikschaltung (17) dafür ausgebildet ist, in Abhängigkeit davon, ob am zweiten Eingangsport (32) ein erster oder ein zweiter logischer Zustand anliegt, einen ersten oder einen zweiten Betriebszustand einzustellen, wobei
- im ersten Betriebszustand eine Änderung eines logischen Zustands am ersten Eingangsport (20) eine Änderung eines logischen Zustands am ersten Ausgangsport (24) hervorruft und eine Änderung eines logischen Zustands am dritten Eingangsport (34) keine Änderung des logischen Zustands am ersten Ausgangsport (24) hervorruft, und
- im zweiten Betriebszustand eine Änderung des logischen Zustands am dritten Eingangsport (34) eine Änderung des logischen Zustands am ersten Ausgangsport (24) hervorruft.

2. Vorrichtung nach Anspruch 1, wobei die Logikschaltung (17) aufweist:
- ein erstes digitales Element (18), das den ersten Eingangsport (20), den ersten Ausgangsport (24) und einen vierten Eingangsport (22) aufweist, wobei das erste Element (18) dafür ausgebildet ist, bei einer Änderung des Zustands am ersten oder am zweiten Eingangsport (20, 22) den Zustand am ersten Ausgangsport (24) zu ändern,
- ein zweites digitales Element (30), das den zweiten und den dritten Eingangsport (32, 34) und einen zweiten Ausgangsport (36) aufweist, wobei das zweite digitale Element (30) dafür ausgebildet ist, sofern am zweiten Eingangsport (32) ein erster logischer Zustand anliegt, bei einer Änderung des logischen Zustands am dritten Eingangsport (34) eine Änderung des logischen Zustands am ersten Ausgangsport (24) hervorzurufen, und dafür ausgebildet ist, sofern am zweiten Eingangsport (32) ein zweiter logischer Zustand anliegt, der vom ersten logischen Zustand verschieden ist, den logischen Zustands am ersten Ausgangsport (24) konstant zu halten, auch wenn sich der logische Zustand am dritten Eingangsport (34) ändert,
wobei der zweite Ausgangsport (36) mit dem vierten Eingangsport (22) derart verbunden ist, so dass eine Änderung des logischen Zustands am zweiten Ausgangsport (36) zu einer Änderung des logischen Zustands am dritten Eingangsport (34) führt.

3. Vorrichtung nach Anspruch 1 oder 2, wobei das erste digitale Element (18) als XOR-Element ausgebildet ist.

4. Vorrichtung nach einem der vorhergehenden Ansprüche, wobei das zweite digitale Element (30) als AND-Element ausgebildet ist, wobei der dritte Eingangsport (32) negiert ist.

5. Vorrichtung nach einem der vorhergehenden Ansprüche, wobei die Impedanz (12) ein resistives Element (42) aufweist, das in Reihe im Rückkopplungspfad (40) angeordnet ist, und/oder ein kapazitives Element (44) aufweist, das an den Rückkopplungspfad (40) angeschlossen und gegen Masse (GND) geführt ist.

6. Vorrichtung nach einem der vorhergehenden Ansprüche, wobei vor dem dritten Eingangsport (34) oder im vierten Eingangsport (34) ein Hystereseelement (46) angeordnet ist oder der dritten Eingangsport (34) mit einer Hystereseeigenschaft ausgebildet ist.

7. Vorrichtung nach einem der vorhergehenden Ansprüche, wobei die Vorrichtung (10) mehrere Impedanzen (12a, 12b, 12c) aufweist, die mittels eines Auswahlelements (80) selektiv in den Rückkopplungspfad (40) geschaltet werden.

8. Vorrichtung nach einem der vorhergehenden Ansprüche, wobei am dritten Eingangsport (34) ein Ableitelement (90) angeordnet ist, das dafür ausgebildet ist, den Rückkopplungspfad (40) zeitweise hochohmig oder gegen Masse (GND) zu schalten.

9. Vorrichtung nach einem der vorhergehenden Ansprüche, wobei das zweite Element (30) mit dem Rückkopplungspfad (40) zu einem Oszillator, insbesondere einem Relaxationsoszillator, ausgebildet ist.

10. Vorrichtung nach einem der vorhergehenden Ansprüche, wobei die Impedanz (12) zumindest teilweise als Elektrode ausgebildet ist.

11. Vorrichtung nach einem der vorhergehenden Ansprüche, wobei der Rückkopplungspfad (40) mit dem zweiten Ausgangsport (24) statt mit dem ersten Ausgangsport (24) verbunden ist.

12. Reihenschaltung (60) mit mindestens einer ersten und einer zweiten Vorrichtung (10a, 10b), jeweils nach einem der vorhergehenden Ansprüche, wobei der Ausgang (16) der ersten Vorrichtung (10a) mit dem Eingang (14) der zweiten Vorrichtung (lOb) elektrisch verbunden ist.

13. System (62) zum Erfassen und Übertragen von Messwerten, insbesondere von Messwerten, die eine Annäherung oder Berührung bezogen auf Sensorelemente (74) anzeigen, mit einer Reihenschaltung (60) nach einem der vorhergehenden Ansprüche und mit einer Steuereinrichtung (64), die mindestens zwei Aktivierungsausgänge (66a, 66b) aufweist, die jeweils mit dem zweiten Eingangsport (32) einer jeweiligen Vorrichtung verbunden sind, und die einen Empfangsport (70) aufweist, der mit dem ersten Ausgangsport (24) der letzten Vorrichtung (10c) in der Reihenschaltung (60) verbunden ist.

14. System nach Anspruch 13, wobei die Steuereinrichtung dafür ausgebildet ist, eine Anzahl von Flankenwechseln am Empfangsport (70) je Zeiteinheit zu ermitteln und bevorzugt den dadurch signalisierten Messwert zu bestimmen.

15. Haushaltsgerät (72) mit einer Vorrichtung (10) nach einem der vorhergehenden Ansprüche oder mit einer Reihenschaltung (60) nach einem der vorhergehenden Ansprüche oder mit einem System (62) nach einem der vorhergehenden Ansprüche.

## Claims

1. Apparatus (10) for acquiring and transmitting a measured value, in particular a measured value indicating an approach or a touch related to at least one sensor element (74), comprising
- a logic circuitry (17) comprising a first input port (20), a second input port (32), a third input port (34) and a first output port (24), and
- a feedback path (40),
**characterized in that**
the feedback path (40) provides a connection between the first output port (24) and the third input port (34) and is configured to provide to the third input port (34) a feedback of a change of a condition at the first output port (24) delayed by a time constant (v),
the feedback path (40) comprises an impedance (12) which is at least in part configured as a sensor element (74) or a button (76), so that an approach or a touch of the sensor element (74) or an actuation of the button (76) can be detected, the impedance changing dependent on the acquired measured value and thereby changing the time constant (v) of the feedback in the feedback path (40), and
the logic circuitry (17) is configured to set a first or a second operating condition dependent on whether a first or a second logic condition is present at the second input port (32), wherein
- in the first operating condition a change of the logic condition at the first input port (20) triggers a change of a logic condition at the first output port (24) and a change in a logic condition at the third input port (34) does not trigger a change in the logic condition at the first output port (24), and
- in the second operating condition a change of the logic condition at the third input port (34) triggers a change of the logic condition at the first output port (24).

2. Apparatus according to claim 1, the logic circuitry (17) comprising:
- a first digital element (18) comprising the first input port (20), the first output port (24) and a fourth input port (22), wherein the first element (18) is configured to change the condition at the first output port (24) when the condition at the first or at the second input port (20, 22) changes,
- a second digital element (30) comprising the second and the third input port (32, 34) and a second output port (36), wherein the second digital element (30) is configured, if a first logic condition is present at the second input port (32), to cause a change of the logic condition at the first output port (24) if a change of the logic condition at the third input port (34) occurs, and which is configured, if a second logic condition is present at the second input port (32), the second logic condition being different from the first logic condition, to maintain the logic condition at the first output port (24) constant, even if the logic condition at the third input port (34) changes,
wherein the second output port (36) is connected with the fourth input port (22), so that a change of the logic condition at the second output port (36) causes a change of the logic condition at the third input port (34).

3. Apparatus according to claim 1 or 2, wherein the first digital element (18) is configured as an XOR-element.

4. Apparatus according to any preceding claim wherein the second digital element (30) is configured as an AND-element, and wherein the third input port (34) is negated.

5. Apparatus according to any preceding claim, wherein the impedance (12) comprises a resistive element (42) which is arranged in series to the feedback path (40) and/or comprises a capacitive element (44) which is connected to the feedback path (40) and which is connected to ground (GND).

6. Apparatus according to any preceding claim, wherein a hysteresis element (46) is arranged before the third input port (34) or the fourth input port (22) or that the third input port (34) is configured to have hysteresis characteristics.

7. Apparatus according to any preceding claim, wherein the apparatus (10) comprises a plurality of impedances (12a, 12b, 12c) which can be selectively switched into the feedback (40) via a selecting element (80).

8. Apparatus according to any preceding claim, wherein a sinking element (90) is arranged at the third input port (40) which is configured to temporarily switch the feedback path (40) into a high impedance condition or against ground (GND).

9. Apparatus according to any preceding claim, wherein the second element (30) is configured to provide an oscillator in combination with the feedback path (40), in particular a relaxation oscillator.

10. Apparatus according to any preceding claim, wherein the impedance (12) is configured at least in part as an electrode.

11. Apparatus according to any preceding claim, wherein the feedback path (40) is connected to the second output port (36) instead of the first output port (24).

12. Series arrangement (60) comprising at least a first and a second apparatus (10a, 10b), each according to any of the preceding claims, wherein the output (16) of the first apparatus (10a) is electrically connected to the input (14) of the second apparatus (10b).

13. System (62) for acquiring and transmitting measured values, in particular measured values indicating an approach or a touch related to sensor elements (74) comprising a series arrangement (60) according to any of the preceding claims and a control device (64) having at least two activating outputs (66a, 66b) which are each connected to the second input port (32) of the corresponding apparatus and which comprises a receiving port (70) which is connected to the first output port (24) of the last apparatus (10c) in the series arrangement (60).

14. System according to claim 13, wherein the control device is configured to determine a number of rising and falling edges at the receiving port (70) per unit of time and thus, preferably, to determine the measured value signaled hereby.

15. Household appliance (72) comprising an apparatus (10) according to any preceding claim or comprising a series arrangement (60) according to any preceding claim or comprising a system (62) according to any preceding claim.

## Revendications

1. Dispositif (10) pour relever et transférer une valeur de mesure, en particulier une valeur de mesure qui indique qu'au moins un élément de capteur (74) est approché ou touché, le dispositif présentant
un circuit logique (17) doté d'une première porte d'entrée (20), d'une deuxième porte d'entrée (32), d'une troisième porte d'entrée (34) et d'une première porte de sortie (24) et
un parcours de rétroaction (40),
**caractérisé en ce que**
le parcours de rétroaction (40) forme une liaison entre la première porte d'entrée (24) et la troisième porte d'entrée (34) et est configuré pour rétroagir sur la troisième porte d'entrée (34) par un ralentissement d'une constante de temps (v) lors d'une modification de l'état de la première porte d'entrée (24),
**en ce que** le parcours de rétroaction (40) présente une impédance (12) formée au moins en partie par un élément de détecteur (74) ou une touche (76) de telle sorte que l'approche de l'élément de capteur (74), un contact avec lui ou un actionnement de la touche (76) puissent être détectés pour changer en fonction de la valeur de mesure relevée et ainsi modifier la constante de temps (v) de la rétroaction sur le parcours de rétroaction (40),
**en ce que** le circuit logique (17) est configuré pour établir un premier ou un deuxième état de fonctionnement selon qu'un premier ou un deuxième état logique prévalent sur la deuxième porte d'entrée (32),
**en ce que** dans le premier état de fonctionnement, une modification de l'état logique qui prévaut sur la première porte d'entrée (20) entraîne une modification de l'état logique qui prévaut sur la première porte de sortie (24) et qu'une modification de l'état logique qui prévaut sur la troisième porte d'entrée (34) n'entraîne pas une modification de l'état logique qui prévaut sur la première porte de sortie (24) et
**en ce que** dans le deuxième état de fonctionnement, une modification de l'état logique qui prévaut sur la troisième porte d'entrée (34) entraîne une modification de l'état logique qui prévaut sur la première porte de sortie (24).

2. Dispositif selon la revendication 1, dans lequel le circuit logique (17) présente :
un premier élément numérique (18) qui présente la première porte d'entrée (20), la première porte de sortie (24) et une quatrième porte d'entrée (22), le premier élément (18) étant configuré pour modifier l'état qui prévaut sur la première porte de sortie (24) en cas de modification de l'état qui prévaut sur la première ou sur la deuxième porte d'entrée (20, 22),
un deuxième élément numérique (30) qui présente la deuxième et la troisième porte d'entrée (32, 34) et une deuxième porte de sortie (36), le deuxième élément numérique (30) étant configuré pour, si un premier état logique prévaut sur la deuxième porte d'entrée (32), entraîner une modification de l'état logique qui prévaut sur la première porte de sortie (24) en cas de modification de l'état logique sur la première porte d'entrée (34) et est configuré pour, si un deuxième état logique différent du premier état logique prévaut sur la deuxième porte d'entrée (32), maintenir constant l'état logique qui prévaut sur la première porte de sortie (24) même si l'état logique qui prévaut sur la troisième porte d'entrée (34) change,
la deuxième porte de sortie (36) étant reliée à la quatrième porte d'entrée (22) de telle sorte qu'une modification de l'état logique qui prévaut sur la deuxième porte de sortie (36) entraîne une modification de l'état logique qui prévaut sur la troisième porte d'entrée (34).

3. Dispositif selon les revendications 1 ou 2, dans lequel le premier élément numérique (18) est configuré comme élément OU exclusif.

4. Dispositif selon l'une des revendications précédentes, dans lequel le deuxième élément numérique (30) est configuré comme élément ET, la troisième porte d'entrée (32) ayant son signe inversé.

5. Dispositif selon l'une des revendications précédentes, dans lequel l'impédance (12) présente un élément résistif (42) disposé en série dans le parcours de rétroaction (40) et/ou présente un élément capacitif (44) raccordé au parcours de rétroaction (40) et raccordé à la masse (GND).

6. Dispositif selon l'une des revendications précédentes, dans lequel un élément d'hystérésis (46) est disposé en amont de la troisième porte d'entrée (34) ou dans la quatrième porte d'entrée (34) ou en ce que la troisième porte d'entrée (34) est configurée avec une propriété d'hystérésis.

7. Dispositif selon l'une des revendications précédentes, dans lequel le dispositif (10) présente plusieurs impédances (12a, 12b, 12c) qui sont raccordées sélectivement dans le parcours de rétroaction (40) au moyen d'un élément de sélection (80).

8. Dispositif selon l'une des revendications précédentes, dans lequel un élément d'évacuation (90) configuré pour commuter le parcours de rétroaction (40) sur une résistance élevée pendant certaines parties du temps ou sur la masse (GND) est disposé sur la troisième porte d'entrée (34).

9. Dispositif selon l'une des revendications précédentes, dans lequel le deuxième élément (30) est configuré pour former avec le parcours de rétroaction (40) un oscillateur et en particulier un oscillateur à relaxation.

10. Dispositif selon l'une des revendications précédentes, dans lequel l'impédance (12) est configurée au moins en partie comme électrode.

11. Dispositif selon l'une des revendications précédentes, dans lequel le parcours de rétroaction (40) est relié à la deuxième porte de sortie (24) au lieu de l'être à la première porte de sortie (24).

12. Circuit série (60) présentant au moins un premier et un deuxième dispositif (10a, 10b), chacun selon l'une des revendications précédentes, la sortie (16) du premier dispositif (10a) étant raccordée électriquement à l'entrée (14) du deuxième dispositif (10b).

13. Système (62) de relevé et de transfert de valeurs de mesure, en particulier de valeurs de mesure qui indiquent que des éléments de capteur (74) sont approchés ou touchés, et présentant un circuit série (60) selon l'une des revendications précédentes et un dispositif de commande (64) qui présente au moins deux entrées d'activation (66a, 66b), chacune reliée à la deuxième porte d'entrée (32) du dispositif concerné, et une porte de réception (70) raccordée avec la première porte de sortie (24) du dernier dispositif (10c) dans le circuit série (60).

14. Système selon la revendication 13, dans lequel le dispositif de commande est configuré pour déterminer le nombre d'alternances de flanc par unité de temps sur la porte de réception (70) et de préférence pour déterminer la valeur de mesure ainsi signalée.

15. Appareil domestique (72) doté d'un dispositif (10) selon l'une des revendications précédentes ou d'un circuit série (60) selon l'une des revendications précédentes ou d'un système (62) selon l'une des revendications précédentes.
